# EUROPEAN PATENT APPLICATION

(11) **EP 2 744 029 A1**
(43) Date of publication of application: **18.06.2014**
(21) Application number: 12821740.3
(22) Date of filing: 27.07.2012
(51) Int. Cl.: H01M 10/0562, H01M 4/13, H01M 4/62, H01M 10/44

(54) **SULFIDE-BASED SOLID-STATE BATTERY**

(30) Priority: 11.08.2011 JP 2011175590; 30.05.2012 JP 2012123232
(71) Applicant: TOYOTA JIDOSHA KABUSHIKI KAISHA, Toyota-shi, Aichi-ken, 471-8571 (JP)
(72) Inventor: NAGASE, Hiroshi, Toyota-shi Aichi 471-8571 (JP); OSE, Norihiro, Toyota-shi Aichi 471-8571 (JP); HASEGAWA, Hajime, Toyota-shi Aichi 471-8571 (JP)
(74) Representative: Kuhnen & Wacker
(86) International application number: PCT/JP2012/069195
(87) International publication number: WO 2013/021843

(57) **Abstract**

An object of the present invention is to provide a sulfide-based solid battery which has high charge-discharge capacity especially under high current density conditions.

Disclosed is a sulfide-based solid battery comprising a positive electrode, a negative electrode and a sulfide-based solid electrolyte layer, the sulfide-based solid electrolyte layer being present between the positive electrode and the negative electrode, wherein the negative electrode comprises at least a negative electrode active material layer; wherein the negative electrode active material layer comprises negative electrode active material fine particles and sulfide-based solid electrolyte fine particles; and wherein the ratio of average particle diameter rₐ of the negative electrode active material fine particles to average particle diameter rₛ of the sulfide-based solid electrolyte fine particles (rₐ/rₛ) is 2.0 or more.

## Description

### Technical Field

The present invention relates to a sulfide-based solid battery which has high charge-discharge capacity especially under high current density conditions.

### Background Art

A secondary battery is a battery that is able to convert chemical energy into electrical energy and discharge the energy. Moreover, it is also a battery that is able to convert electrical energy into chemical energy and store (charge) the chemical energy, by passing electrical current in a direction that is opposite to the direction of current at the time of discharge. Of secondary batteries, a lithium secondary battery has high energy density, so that it is widely used as a power source for portable devices such as laptop personal computers, cellular phones, etc.

In a lithium secondary battery, when graphite (referred to as C) is used as a negative electrode active material, a reaction described by the following formula (I) proceeds at the negative electrode, upon discharge:

LiₓC → C + xLi⁺ + xe⁻ (I)

wherein 0<x<1.

Electrons generated by the reaction of the formula (I) pass through an external circuit, work by an external load, and then reach the positive electrode. Lithium ions (Li⁺) generated by the reaction of the formula (I) are transferred by electro-osmosis from the negative electrode side to the positive electrode side through an electrolyte sandwiched between the negative electrode and the positive electrode.

When lithium cobaltate (Li₁₋ₓCoO₂) is used as a positive electrode active material, a reaction described by the following formula (II) proceeds at the positive electrode, upon discharge:

Li₁₋ₓCoO₂ + xLi⁺ + xe⁻ → LiCoO₂ (II)

wherein 0<x<1.

Upon charging the battery, reactions which are reverse to the reactions described by the above formulae (I) and (II) proceed at the negative electrode and the positive electrode, respectively. At the negative electrode, graphite in which lithium has been intercalated by graphite intercalation (LiₓC) becomes reusable, while lithium cobaltate (Li₁₋ₓCoO₂) is regenerated at the positive electrode. Because of this, discharge becomes possible again.

Of lithium secondary batteries, a lithium secondary battery which uses a solid electrolyte as the electrolyte and is all-solidified, contains no combustible organic solvent in the battery. Therefore, the battery is considered to be safe, able to simplify devices and excellent in production cost and productivity. A sulfide-based solid electrolyte is known as a solid electrolyte material used for such a solid lithium secondary battery.

Techniques of mixing a negative electrode active material with a sulfide-based solid electrolyte have been known to produce the negative electrode for a solid lithium secondary battery. Patent Literature 1 discloses a solid lithium secondary battery technique, the battery comprising a negative electrode layer made from a mixture of graphite, which is a negative electrode active material, and 70Li₂S-30P₂S₅, which is a sulfide-based solid electrolyte (Paragraph [0026] of the Description of Patent Literature 1).

A solid lithium secondary battery invention is disclosed in Patent Literature 2, the battery comprising an electrode material sheet as the negative electrode, which has a predetermined porous metallic sheet and an inorganic solid electrolyte (Claims 1 and 5 of Patent Literature 2). In Paragraphs [0020] to [0023] of the Description of Patent Literature 2, there is a description relating to the average particle diameter of the inorganic solid electrolyte used for the electrode material sheet.

### Citation List

Patent Literature 1: Japanese Patent Application Laid-Open (JP-A) No. 2009-266589
Patent Literature 2: JP-A No. 2010-40218

### Summary of Invention

### Technical Problem

As a result of diligent researches, the inventors of the present invention have found that in the case of using a conventional negative electrode layer for all-solid-state batteries as disclosed in Patent Literature 1, it is possible to charge the negative electrode up to the theoretical capacity of the negative electrode active material at low rates (that is, low current densities); however, there is a remarkable decrease in charge capacity at high rates (that is, high current densities).

In Patent Literature 2, it is described that by using an inorganic solid electrolyte which has an average particle diameter that is within a given range, it is possible to prevent problems due to excessive microparticulation, such as reaggregation, decrease in bulk density, and increase in interface resistance (Paragraph [0022] of the Description of Patent Literature 2). However, as a result of researches, the inventors have found that high charge discharge capacity is not provided to the negative electrode, only by considering the contribution of the solid electrolyte.

The present invention was achieved in light of the above circumstances. An object of the present invention is to provide a sulfide-based solid battery which has high charge-discharge capacity especially under high current density conditions.

### Solution to Problem

The sulfide-based solid battery according to the present invention comprises a positive electrode, a negative electrode and a sulfide-based solid electrolyte layer, the sulfide-based solid electrolyte layer being present between the positive electrode and the negative electrode, wherein the negative electrode comprises at least a negative electrode active material layer; wherein the negative electrode active material layer comprises negative electrode active material fine particles and sulfide-based solid electrolyte fine particles; and wherein the ratio of average particle diameter rₐ of the negative electrode active material fine particles to average particle diameter rₛ of the sulfide-based solid electrolyte fine particles (rₐ/rₛ) is 2.0 or more.

In the present invention, the average particle diameter rₐ of the negative electrode active material fine particles is preferably 50 µm or less.

In the present invention, the average particle diameter rₛ of the sulfide-based solid electrolyte fine particles is preferably 0.8 µm or more.

In the present invention, the sulfide-based solid battery is preferably charged at a current density of 1 C or more.

### Advantageous Effects of Invention

According to the present invention, by setting the ratio of average particle diameter rₐ of the negative electrode active material fine particles to average particle diameter rₛ of the sulfide-based solid electrolyte fine particles (rₐ/rₛ) to 2.0 or more, it is possible to increase the contact area between the negative electrode active material and the sulfide-based solid electrolyte more than ever before, and to have high charge-discharge capacity especially under the high current density conditions.

### Brief Description of Drawings

Fig. 1 is a view showing an example of the layer structure of the sulfide-based solid battery according to the present invention, and it is also a view schematically showing a cross section of the sulfide-based solid battery sectioned in a laminating direction.
Figs. 2(a) and (2b) are graphs comparing the negative electrode capacities of sulfide-based solid batteries of Examples 1 to 5 and Comparative Examples 1 to 3, under a current density condition of 0.1 C or 2 C.
Fig. 3 is an SEM image showing the negative electrode of the sulfide-based solid battery of Example 1.
Fig. 4 is a graph comparing the negative electrode capacities of sulfide-based solid batteries of Examples 6 to 10, Reference Example 1 and Comparative Example 4, under a current density condition of 1.5 C.
Fig. 5 is an SEM image showing the negative electrode of the sulfide-based solid battery of Comparative Example 1.

### Description of Embodiments

The sulfide-based solid battery according to the present invention comprises a positive electrode, a negative electrode and a sulfide-based solid electrolyte layer, the sulfide-based solid electrolyte layer being present between the positive electrode and the negative electrode, wherein the negative electrode comprises at least a negative electrode active material layer; wherein the negative electrode active material layer comprises negative electrode active material fine particles and sulfide-based solid electrolyte fine particles; and wherein the ratio of average particle diameter rₐ of the negative electrode active material fine particles to average particle diameter rₛ of the sulfide-based solid electrolyte fine particles (rₐ/rₛ) is 2.0 or more.

In general, a carbonaceous material such as graphite or carbon is used as the negative electrode active material for the negative electrode of a sulfide-based solid battery. The negative electrode of conventional sulfide-based solid batteries can be charged up to the theoretical capacity of the negative electrode active material, when current densities upon charge are small (that is, low rates). However, as for the negative electrode of conventional sulfide-based solid batteries, there is a remarkable decrease in the charge capacity when current densities upon charge are large (that is, high rates). The reason is considered as follows: in the negative electrode of conventional sulfide-based solid batteries, in the case of high rates, a lithium insertion reaction into the negative electrode, which corresponds to an opposite reaction to the reaction represented by the above formula (I), is delayed and results in an irregular charging curve and thus a failure in normal charging . That is, the negative electrode of conventional sulfide-based solid batteries has problems with input characteristics.

As a result of diligent researches, the inventors of the present invention have found the following: in the prior arts, the contact area between negative electrode active material fine particles and the sulfide-based solid electrolyte fine particles is small; therefore, especially when charging at high rates, an excessive number of lithium ions are supplied to the negative electrode active material fine particles from a part of the sulfide-based solid electrolyte fine particles, which are in contact with the negative electrode active material fine particles, resulting in a failure in normal migration of lithium ions into the negative electrode active material fine particles. Also, the inventors have found that by using the negative electrode active material fine particles having an average particle diameter that is 2.0 times or more larger than the average particle diameter of the sulfide-based solid electrolyte fine particles, it is possible to solve the above problems in charging especially at high rates and to improve the input characteristics. In light of the above findings, the inventors achieved the present invention.

The negative electrode active material fine particles used in the present invention is not particularly limited, as long as the particles are fine particles that can store/release metal ions. In the case of using lithium ions as metal ions, examples of the negative electrode active material fine particles include lithium metal fine particles, lithium alloy fine particles, fine particles of metal oxides (such as lithium titanate), metal sulfides and metal nitrides, and fine particles of carbonaceous materials such as graphite, soft carbon and hard carbon. Among them, graphite fine particles, soft carbon fine particles and hard carbon fine particles are particularly preferable as the negative electrode active material fine particles.

In the present invention, the negative electrode active material fine particles used can be one kind of fine particles or a combination of two or more kinds of fine particles.

The average particle diameter rₐ of the negative electrode active material fine particles is preferably 50 µm or less. When the average particle diameter rₐ is more than 50 µm, the negative electrode active material fine particles are too large. Therefore, even if the negative electrode active material fine particles are wholly covered with the sulfide-based solid electrolyte, the contact area is not sufficient, so that lithium insertion and desorption by charging and discharging at high rates may not proceed satisfactorily. Also, when the negative electrode active material fine particles are too large, lithium diffusion in the negative electrode active material becomes the rate-determining step.

The average particle diameter rₐ of the negative electrode active material fine particles is more preferably 40 µm or less, still more preferably 30 µm or less. Also, the average particle diameter rₐ of the negative electrode active material fine particles is preferably 0.1 µm or more, more preferably 5 µm or more.

In the present invention, the average particle diameter of particles is calculated by a common method. An example method for calculating the average particle diameter of particles is as follows. First, the diameter of a particle is calculated, the particle being shown in a 400,000 to 1,000,000-fold TEM (transmission electron microscope) image and considered to be spherical. Such a particle diameter calculation by TEM observation is performed on 200 to 300 particles of the same type, and the average of the particles is considered as the average particle diameter.

Also in the present invention, the average particle diameter D50 can be used as the average particle diameter of particles, which is measured by a laser scattering/diffraction particle size distribution analyzer, etc.

The sulfide-based solid electrolyte fine particles used in the present invention is not particularly limited, as long as the particles comprise a solid electrolyte that contains sulfur atoms. When the sulfide-based solid battery of the present invention is a lithium battery, concrete examples of the sulfide-based solid electrolyte contained in the sulfide-based solid electrolyte fine particles, include Li₂S-P₂S₅, Li₂S-P₂S₃, Li₂S-P₂S₃-P₂S₅, Li₂S-SiS₂, Li₂S-Si₂S, Li₂S-B₂S₃, Li₂S-GeS₂, LiI-Li₂S-P₂S₅, LiI-Li₂S-SiS₂-P₂S₅, Li₂S-SiS₂-Li₄SiO₄, Li₂S-SiS₂-Li₃PO₄, Li₃PS₄-Li₄GeS₄, Li_{3.4}P_{0.6}Si_{0.4}S₄, Li_{3.25}P_{0.25}Ge_{0.76}S₄ and Li₄-ₓGe₁₋ₓPₓS₄. As the sulfide-based solid electrolyte fine particles, preferred are those containing sulfur (S), lithium (Li) and phosphorous (P) atoms.

In the present invention, the sulfide-based solid electrolyte fine particles used can be one kind of fine particles or a combination of two or more kinds of fine particles.

The average particle diameter rₛ of the sulfide-based solid electrolyte fine particles is preferably 0.8 µm or more. It has been considered that the smaller the average particle diameter rₛ of the sulfide-based solid electrolyte fine particles contained in the negative electrode, the higher the dispersibility of the sulfide-based solid electrolyte fine particles, resulting in an increase in contact area between the negative electrode active material fine particles and the sulfide-based solid electrolyte fine particles, and excellent ion conductivity between the sulfide-based solid electrolyte fine particles. However, as a result of studies, the inventors of the present invention have found that when the average particle diameter rₛ is too small, there is an increase in interface resistance between the sulfide-based solid electrolyte fine particles and thus a deterioration in lithium ion conductivity. Also, the inventors have found that the input characteristics at the time of charging at high rates are improved by setting the average particle diameter rₛ to 0.8 µm or more.

The average particle diameter rₛ of the sulfide-based solid electrolyte fine particles is more preferably 1.0 µm or more, still more preferably 1.5 µm or more. The average particle diameter rₛ of the sulfide-based solid electrolyte fine particles is preferably 10 µm or less, more preferably 7.0 µm or less.

A main characteristic of the present invention is that the ratio of the average particle diameter rₐ of the negative electrode active material fine particles to the average particle diameter rₛ of the sulfide-based solid electrolyte fine particles (rₐ/rₛ) is 2.0 or more, that is, the average particle diameter rₐ is 2.0 times or more larger than the average particle diameter rₛ.

As shown in Comparative Examples 1 to 3, which will be described below, when the ratio (rₐ/rₛ) is less than 2.0, there is a rapid decrease in the negative electrode capacity, upon charging at a high rate of 2 C. This is due to the small contact area between the negative electrode active material fine particles and the sulfide-based solid electrolyte fine particles, as described above.

Meanwhile, as shown in the below-described Examples 1 to 5, when the ratio (rₐ/rₛ) is 2.0 or more, the negative electrode capacity becomes a value within a certain range, even upon charging at a high rate of 2 C. This is because many of the sulfide-based solid electrolyte fine particles can exist around the negative electrode active material fine particles, so that lithium ions are likely to be inserted into the negative electrode active material even when the current density upon charging is large.

In the present invention, the ratio (rₐ/rₛ) is preferably 2.5 or more, more preferably 3.0 or more, still more preferably 5.0 or more.

In the present invention, preferably, the ratio of the average particle diameter rₐ of the negative electrode active material fine particles to the average particle diameter rₛ of the sulfide-based solid electrolyte fine particles (rₐ/rₛ) is 15 or less. The reason is as follows: when the ratio (rₐ/rₛ) is too large, the negative electrode active material fine particles become too much larger than the sulfide-based solid electrolyte fine particles; therefore, there is a decrease in the contact area between the negative electrode active material fine particles and the sulfide-based solid electrolyte fine particles, and thus there may be a decrease in the negative electrode capacity.

In the present invention, the ratio (rₐ/rₛ) is more preferably 13 or less, still more preferably 10 or less.

In the present invention, the sulfide-based solid battery is preferably charged at a current density of 1 C or more. As shown in the below-described Examples, upon charging at a low rate of less than 1 C, there is no remarkable difference between the capacity of the present invention and that of sulfide-based solid batteries comprising conventional negative electrode active materials; therefore, the effect of increasing charge-discharge capacity, which is an effect of the present invention, may not be fully exerted.

More preferably, the solid battery of the present invention is charged at a current density of 1.5 C or more, still more preferably at a current density of 2 C or more.

When the total mass of the whole negative electrode active material layer is 100% by mass, the content of the negative electrode active material fine particles in the negative electrode active material layer is preferably 20 to 90% by mass. When the content is less than 20% by mass, it is too small and electrode reaction may not sufficiently proceed. When the content is more than 90% by mass, the content of the sulfide-based solid electrolyte fine particles is relatively too small, so that sufficient lithium ions may not be conducted into the negative electrode.

When the total mass of the whole negative electrode active material layer is 100% by mass, the content of the negative electrode active material fine particles is more preferably 50% by mass or more. Also, the content is more preferably 80% by mass or less.

When the total volume of the whole negative electrode active material layer is 100% by volume, the content of the negative electrode active material fine particles in the negative electrode active material layer is preferably 20 to 90% by volume. When the content is less than 20% by volume, it is too small and electrode reaction may not sufficiently proceed. When the content is more than 90% by volume, the content of the sulfide-based solid electrolyte fine particles is relatively too small, so that sufficient lithium ions may not be conducted into the negative electrode.

When the total volume of the whole negative electrode active material layer is 100% by volume, the content of the negative electrode active material fine particles is more preferably 50% by volume or more. Also, the content of the negative electrode active material fine particles is more preferably 80% by volume or less.

When the total mass of the whole negative electrode active material layer is 100% by mass, the content of the sulfide-based solid electrolyte fine particles in the negative electrode active material layer is preferably 10 to 80% by mass. When the content is less than 10% by mass, it is too small and sufficient lithium ions may not be conducted into the negative electrode. When the content is more than 80% by mass, the content of the negative electrode active material fine particles is relatively too small, so that electrode reaction may not sufficiently proceed.

When the total mass of the whole negative electrode active material layer is 100% by mass, the content of the sulfide-based solid electrolyte fine particles is more preferably 20% by mass or more. Also, the content is more preferably 50% by mass or less.

When the total volume of the whole negative electrode active material layer is 100% by volume, the content of the sulfide-based solid electrolyte fine particles in the negative electrode active material layer is preferably 10 to 80% by volume. When the content is less than 10% by volume, it is too small and sufficient lithium ions may not be conducted into the negative electrode. When the content is more than 80% by volume, the content of the negative electrode active material fine particles is relatively too small, so that electrode reaction may not sufficiently proceed.

When the total volume of the whole negative electrode active material layer is 100% by volume, the content of the sulfide-based solid electrolyte fine particles is more preferably 20% by volume or more. Also, the content is more preferably 50% by volume or less.

In addition to the negative electrode active material fine particles and the sulfide-based solid electrolyte fine particles, as described below, other raw materials such as an electroconductive material and a binder can be contained in the negative electrode active material layer. When the total mass of the whole negative electrode active material layer is 100% by mass, the total content of raw materials other than the negative electrode active material fine particles and the sulfide-based solid electrolyte fine particles, is preferably 0 to 20% by mass, from the point of view that the effect of maintaining high charge-discharge capacity can be fully exerted even upon charging and discharging under high current density conditions.

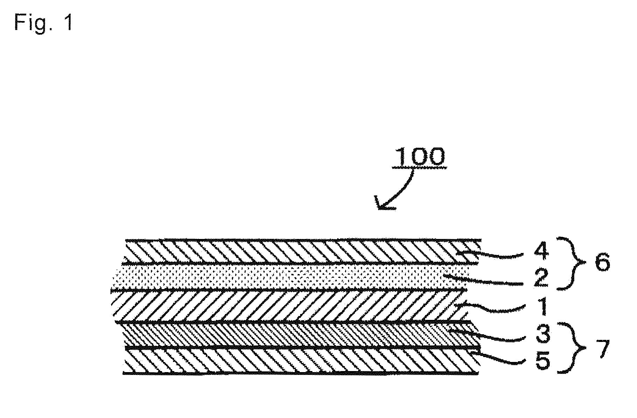

Fig. 1 is a view showing an example of the layer structure of the sulfide-based solid battery according to the present invention, and it is also a view schematically showing a cross section of the sulfide-based solid battery sectioned in a laminating direction. The sulfide-based solid battery of the present invention is not limited to this example.

A sulfide-based solid battery 100 comprises a positive electrode 6, a negative electrode 7 and a sulfide-based solid electrolyte layer 1, the positive electrode 6 comprising a positive electrode active material layer 2 and a positive electrode current collector 4, the negative electrode 7 comprising a negative electrode active material layer 3 and a negative electrode current collector 5, and the sulfide-based solid electrolyte layer 1 being present between the positive electrode 6 and the negative electrode 7.

Hereinafter, the positive electrode, the negative electrode and the sulfide-based solid electrolyte layer, which are used for the sulfide-based solid battery of the present invention, will be explained in detail, along with other members that are suitably used for the sulfide-based solid battery, such as a separator and a battery case.

The positive electrode used in the present invention preferably comprises a positive electrode current collector and a positive electrode tab that is connected to the positive electrode current collector. More preferably, the positive electrode further comprises a positive electrode active material layer containing a positive electrode active material.

Concrete examples of positive electrode active materials that can be used in the present invention include LiCoO₂, LiNiCoMn, LiNi_{1/3}Mn_{1/3}Co_{1/3}O₂, LiNiPO₄, LiMnPO₄, LiNiO₂, LiMn₂O₄, LiCoMnO₄, Li₂NiMn₃O₈, Li₃Fe₂(PO₄)₃ and Li₃V₂(PO₄)₃. Fine particles comprising a positive electrode active material can be covered with LiNbO₃ or the like.

Of these materials, in the present invention, it is preferable to use LiCoO₂ or LiNiCoMn as the positive electrode active material.

The thickness of the positive electrode active material layer used in the present invention varies depending on the intended use of the sulfide-based solid battery, etc. However, the thickness is preferably 5 to 250 µm, more preferably 20 to 200 µm, still more preferably 30 to 150 µm.

The average particle diameter of the positive electrode active material is preferably 1 to 50 µm, more preferably 1 to 20 µm, still more preferably 3 to 5 µm. When the average particle diameter of the positive electrode active material is too small, there is a possibility of poor handling properties. When the average particle diameter of the positive electrode active material is too large, there may be a difficulty in obtaining a flat positive electrode active material layer. The average particle diameter of the positive electrode active material can be obtained by, for example, measuring the particle diameters of active material carrier particles observed with a scanning electron microscope (SEM) and averaging the particle diameters.

As needed, the positive electrode active material layer can contain an electroconductive material, a binder, etc.

The electroconductive material used in the present invention is not particularly limited, as long as it can increase the electroconductivity of the positive electrode active material layer. The examples include carbon blacks such as acetylene black, Ketjen Black and VGCF. The content of the electroconductive material in the positive electrode active material layer varies depending on the type of the electroconductive material; however, it is generally 1 to 10% by mass.

As the binder used in the present invention, for example, there may be mentioned synthetic rubbers such as styrene-butadiene rubber, ethylene-propylene rubber and styrene-ethylene-butadiene rubber; and fluorine polymers such as polyvinylidene fluoride (PVDF) and polytetrafluoroethylene (PTFE). The content of the binder in the positive electrode active material layer is required to be a content which allows the positive electrode active material and so on to be fixed, and is preferably as small as possible. The content of the binder is generally 1 to 10% by mass. By containing the binder, the flexibility of the whole solid battery is expected to increase.

After forming the positive electrode active material layer, the layer can be pressed to increase the electrode density.

The positive electrode current collector used in the present invention is not particularly limited, as long as it functions to collect current from the positive electrode active material layer. Examples of materials for the positive electrode current collector include aluminum, aluminum alloy, stainless-steel, nickel, iron and titanium, and preferred are aluminum, aluminum alloy and stainless-steel. Examples of the form of the positive electrode current collector include a foil form, a plate form and a mesh form. Preferred is a foil form.

The positive electrode tab is a member for connecting the positive electrode current collector with leads and/or external loads outside the battery. The positive electrode tab is not particularly limited, as long as it is made of any of the same materials as those of the above-described positive electrode current collector. Examples of the materials for the positive electrode tab include aluminum, aluminum alloy and stainless-steel.

From the viewpoint of increased sealing properties, a dedicated sealing material can be used for the seal tab of the positive electrode tab and for the sealing part of the below-described battery case. Examples of the dedicated sealing material include commodity polymers such as polypropylene. There may be used a commercially-available tab lead (manufactured by Sumitomo Electric Industries, Ltd.) which is an integrated combination of positive electrode tab and seal.

The positive electrode used in the present invention can contain a solid electrolyte. Concrete examples of the solid electrolyte include an oxide-based solid electrolyte, a polymer electrolyte and a gel electrolyte, in addition to the above-described sulfide-based solid electrolyte.

Concrete examples of the oxide-based solid electrolyte include oxide solid electrolytes such as LiPON (lithium phosphorus oxynitride), Li_{1.3}Al_{0.3}Ti_{0.7} (PO₄)₃, La_{0.5}Li_{0.34}TiO_{0.74}, Li₃PO₄, Li₂SiO₂ and Li₂SiO₄.

The polymer electrolyte contains a lithium salt and a polymer. The lithium salt is not particularly limited as long as it is one that is used for general lithium batteries. The examples include LiPF₆, LiBF₄, LiN (CF₃SO₂)₂, LiCF₃SO₃, LiC₄F₉SO₃, LiC(CF₃SO₂)₃ and LiClO₄. The polymer is not particularly limited as long as it can form a complex with a lithium salt. As the polymer, for example, there may be mentioned polyethylene oxide.

The gel electrolyte contains a lithium salt, a polymer and a non-aqueous solvent.

As the lithium salt, there may be used any one of the above-mentioned lithium salts.

The non-aqueous solvent is not particularly limited as long as it can dissolve the above lithium salts. The examples include propylene carbonate, ethylene carbonate, diethyl carbonate, dimethyl carbonate, ethyl methyl carbonate, 1,2-dimethoxyethane, 1,2-diethoxyethane, acetonitrile, propionitrile, tetrahydrofuran, 2-methyltetrahydrofuran, dioxane, 1,3-dioxolan, nitromethane, N,N-dimethylformamide, dimethylsulfoxide, sulfolane and γ-butyrolactone. These non-aqueous solvents can be used alone or in combination of two or more kinds. Also, a room-temperature molten salt (ionic solution) can be used as the non-aqueous solvent.

The polymer is not particularly limited as long as it enables gelation. The examples include polyethylene oxide, polypropylene oxide, polyacrylonitrile, polyvinylidene fluoride (PVDF), polyurethane, polyacrylate and cellulose.

The negative electrode used in the present invention comprises at least a negative electrode active material layer. The negative electrode active material layer comprises the above negative electrode active material fine particles and the above sulfide-based solid electrolyte fine particles. The negative electrode used in the present invention preferably comprises a negative electrode current collector and a negative electrode tab connected to the negative electrode current collector.

As needed, the negative electrode active material layer can contain an electroconductive material, a binder, etc.

As the binder and electroconductive material that can be contained in the negative electrode active material layer, there may be used those mentioned above. The thickness of the negative electrode active material layer is not particularly limited. However, it is preferably 5 to 150 µm, more preferably 10 to 80 µm.

The negative electrode current collector used in the present invention is not particularly limited, as long as it functions to collect current from the negative electrode active material layer.

Examples of materials for the negative electrode current collector include nickel, copper and stainless-steel. Examples of the form of the negative electrode current collector include a foil form, a plate form and a mesh form. Preferred is a foil form.

The negative electrode tab is a member for connecting the negative electrode current collector with leads and/or external loads outside the battery. The negative electrode tab is not particularly limited, as long as it is made of any of the same materials as those of the above-described negative electrode current collector. Examples of the materials for the negative electrode tab include nickel, copper and stainless-steel.

The negative electrode tab is similar to the positive electrode tab in that a dedicated sealing material can be used and that a tab lead can be used, which is an integrated combination of negative electrode tab and seal.

As the method for producing the negative electrode used in the present invention, there may be used a method that is similar to the above-described positive electrode production method.

Preferably, the sulfide-based solid electrolyte layer used in the present invention functions to exchange ions between the positive electrode and negative electrode active material layers. As the sulfide-based solid electrolyte, there may be used a crystalline solid electrolyte.

Concrete examples of the sulfide-based solid electrolyte used in the present invention are as described above.

To process the sulfide-based solid electrolyte into a layer, there may be mentioned the method for pressing the sulfide-based solid electrolyte, for example. Or, there may be used a method in which the above-described sulfide-based solid electrolyte is mixed with a solvent to produce a slurry, and the slurry is applied to a desired area such as the positive electrode or negative electrode to form a layer.

The sulfide-based solid electrolyte layer can further comprise the above-mentioned binder.

Other components that can be used in the present invention include a separator. The separator is provided between the positive electrode and the negative electrode. In general, it functions to prevent contact between the positive electrode active material layer and the negative electrode active material layer and to retain the sulfide-based solid electrolyte layer. Examples of materials for the separator include resins such as polyethylene (PE), polypropylene (PP), polyester, cellulose and polyamide. Preferred are polyethylene and polypropylene. The separator can have a single- or multilayer structure. Examples of the separator having a multilayer structure include a separator having a two-layer structure of PE/PP and a separator having a three-layer structure of PP/PE/PP. Also in the present invention, the separator can be a non-woven fabric such as a resin non-woven fabric or a glass fiber non-woven fabric. The thickness of the separator is not particularly limited and is similar the thickness of separators that are used for general sulfide-based solid batteries.

Other components that can be used in the present invention include a battery case. The form of the battery case applicable to the present invention is not particularly limited, as long as it can house the above-described positive electrode, negative electrode, sulfide-based solid electrolyte layer, etc. Concrete examples thereof include a cylindrical form, a square form, a coin form and a laminate form. When the battery case is a laminate-type battery case, there may be used a laminate film which is a three-layer film composed of polyethylene phthalate/aluminum/polyethylene.

According to the present invention, by reducing the average particle diameter of the sulfide-based solid electrolyte fine particles to as small as 1/2.0 or less of the average particle diameter of the negative electrode active material fine particles, the contact interface between the negative electrode active material fine particles and the sulfide-based solid electrolyte fine particles is increased, so that the supply of metal ions (in the case of lithium batteries, lithium ions) from the sulfide-based solid electrolyte fine particles to the negative electrode active material fine particles becomes easy. Therefore, when charged and discharged especially at high rates, electrode reaction is not concentrated in part of the negative electrode active material fine particles and the whole negative electrode active material contributes to electrode reaction, so that charge-discharge capacity can be increased.

Also according to the present invention, due to the use of incombustible sulfide-based solid electrolyte, the solid battery of the present invention is safer than secondary batteries using conventional organic solvents.

### Examples

Hereinafter, the present invention will be described in detail, by way of examples and comparative examples. However, the present invention is not limited to these examples.

### 1. Production of sulfide-based solid electrolyte fine particles

### [Production Example 1]

First, 0.7656 g of Li₂S (manufactured by Nippon Chemical Industrial Co., Ltd.) and 1.2344 g of P₂S₅ (manufactured by Aldrich) were mixed by an agate mortar for 5 minutes.

Under a dry atmosphere, the raw material mixture, 4 g of heptane and 53 g of zirconia grinding balls (ϕ=5 mm) were put in a zirconia pot. The zirconia pot was hermetically closed, installed in a planetary ball mill and then subjected to the first-round mechanical milling in the following condition: plate rotational frequency 500 rpm, temperature 20°C and milling time 40 hours.

Following the first-round mechanical milling, the sample was further subjected to the second-round mechanical milling in the condition of plate rotational frequency 300 rpm, temperature 20°C and milling time 3 hours, thus producing the sulfide-based solid electrolyte fine particles of Production Example 1.

The particle size distribution of the fine particles was measured by a laser scattering/diffraction particle size distribution analyzer (MICROTRAC MT3300EXII manufactured by Nikkiso Co., Ltd.) As a result, the sulfide-based solid electrolyte fine particles of Production Example 1, which were obtained through the two cycles of mechanical milling, were found to have an average particle diameter, D50, of 1.9 µm.

### [Production Example 2]

A sample was produced and subjected to the first-round mechanical milling in the same manner as Production Example 1.

Following the first-round mechanical milling, the sample was further subjected to the second-round mechanical milling in the condition of plate rotational frequency 300 rpm, temperature of 20°C and milling time 1 hour, thus producing the sulfide-based solid electrolyte fine particles of Production Example 2.

As a result of measurement by the laser scattering/diffraction particle size distribution analyzer, the sulfide-based solid electrolyte fine particles of Production Example 2, which were obtained through the two cycles of mechanical milling, were found to have an average particle diameter, D50, of 3.9 µm.

### [Production Example 3]

A sample was produced and subjected to the first-round mechanical milling in the same manner as Production Example 1.

Following the first-round mechanical milling, the sample was classified by a stainless-steel sieve (mesh 10 µm), thus producing the sulfide-based solid electrolyte fine particles of Production Example 3.

As a result of measurement by the laser scattering/diffraction particle size distribution analyzer, the sulfide-based solid electrolyte fine particles of Production Example 3, which were obtained by the classification, were found to have an average particle diameter, D50, of 6.7 µm.

### [Production Example 4]

A sample was produced and subjected to the first-round mechanical milling in the same manner as Production Example 1.

Following the first-round mechanical milling, the sample was classified by a stainless-steel sieve (mesh 20 µm), thus producing the sulfide-based solid electrolyte fine particles of Production Example 4.

As a result of measurement by the laser scattering/diffraction particle size distribution analyzer, the sulfide-based solid electrolyte fine particles of Production Example 4, which were obtained by the classification, were found to have an average particle diameter, D50, of 16 µm.

### [Production Example 5]

First, 3326.4 g (33.6 mol) of N-methyl-2-pyrrolidone (NMP) and 287.4 g (12 mol) of lithium hydroxide were put in a 10 L autoclave furnished with stirring blades and then stirred at a rotation speed of 300 rpm, with increasing the temperature to 130°C. After increasing the temperature, hydrogen sulfide was injected into the solution at a supply rate of 3 L/min for 2 hours. Then, the temperature of the reaction solution was increased under a nitrogen flow (200 cc/min) to remove excess hydrogen sulfide from the solution, which remained after the reaction. By-product water was appropriately distilled away therefrom, which was produced by the reaction of the hydrogen sulfide and the lithium hydroxide. The temperature of the resultant was increased to 180°C and kept at 180°C. Removal of the hydrogen sulfide was completed in about 80 minutes, thus producing a lithium sulfide slurry reaction solution.

NMP in 500 mL of the lithium sulfide slurry reaction solution, was decanted off. Then, 100 mL of dehydrated NMP was added to the solution and stirred at 105°C for about 1 hour. Keeping the temperature, NMP was decanted off. Then, 100 mL of NMP was further added to the solution and stirred at 105°C for about 1 hour. Keeping the temperature, NMP was decanted off. As just described, an operation of adding NMP to the lithium sulfide slurry reaction solution, heating and stirring the mixture, and then decanting NMP, was repeated 4 cycles. After the fourth decantation was completed, under a nitrogen flow, the lithium sulfide slurry reaction solution was dried at 230°C (which is a temperature that is equal to or more than the boiling point of NMP) under ordinary pressure for 3 hours, thus synthesizing lithium sulfide (Li₂S).

The synthesized Li₂S and P₂S₅ (manufactured by Aldrich) were mixed at a ratio of Li₂S:P₂S₅=70 mol%:30 mol%, by an agate mortar for 5 minutes.

Under a dry atmosphere, the raw material mixture, 4 g of heptane and 53 g of zirconia grinding balls (ϕ=5 mm) were put in a zirconia pot. The zirconia pot was hermetically closed, installed in a planetary ball mill and then subjected to the first-round mechanical milling in the following condition: plate rotational frequency 500 rpm, temperature 20°C and milling time 40 hours.

Following the first-round mechanical milling, the sample was further subjected to the second-round mechanical milling in the condition of plate rotational frequency 400 rpm, temperature 20°C and milling time 5 hours, thus producing the sulfide-based solid electrolyte fine particles of Production Example 5.

The particle size distribution of the fine particles was measured by a laser scattering/diffraction particle size distribution analyzer (MICROTRAC MT3300EXII manufactured by Nikkiso Co., Ltd.) As a result, the sulfide-based solid electrolyte fine particles of Production Example 5, which were obtained through the two cycles of mechanical milling, were found to have an average particle diameter, D50, of 0.8 µm.

### [Production Example 6]

A sample was produced and subjected to the first-round mechanical milling in the same manner as Production Example 5.

Following the first-round mechanical milling, the sample was further subjected to the second-round mechanical milling in the condition of plate rotational frequency 350 rpm, temperature of 20°C and milling time 5 hours, thus producing the sulfide-based solid electrolyte fine particles of Production Example 6.

As a result of measurement by the laser scattering/diffraction particle size distribution analyzer, the sulfide-based solid electrolyte fine particles of Production Example 6, which were obtained through the two cycles of mechanical milling, were found to have an average particle diameter, D50, of 1.5 µm.

### [Production Example 7]

A sample was produced and subjected to the first-round mechanical milling in the same manner as Production Example 5.

Following the first-round mechanical milling, the sample was further subjected to the second-round mechanical milling in the condition of plate rotational frequency 300 rpm, temperature of 20°C and milling time 2 hours, thus producing the sulfide-based solid electrolyte fine particles of Production Example 7.

As a result of measurement by the laser scattering/diffraction particle size distribution analyzer, the sulfide-based solid electrolyte fine particles of Production Example 7, which were obtained through the two cycles of mechanical milling, were found to have an average particle diameter, D50, of 2.5 µm.

### [Production Example 8]

A sample was produced and subjected to the first-round mechanical milling in the same manner as Production Example 5.

Following the first-round mechanical milling, the sample was classified by a stainless-steel sieve (mesh 3 µm), thus producing the sulfide-based solid electrolyte fine particles of Production Example 8.

As a result of measurement by the laser scattering/diffraction particle size distribution analyzer, the sulfide-based solid electrolyte fine particles of Production Example 8, which were obtained by the classification, were found to have an average particle diameter, D50, of 2.6 µm.

### [Production Example 9]

A sample was produced and subjected to the first-round mechanical milling in the same manner as Production Example 5.

Following the first-round mechanical milling, the sample was classified by a stainless-steel sieve (mesh 5 µm), thus producing the sulfide-based solid electrolyte fine particles of Production Example 9.

As a result of measurement by the laser scattering/diffraction particle size distribution analyzer, the sulfide-based solid electrolyte fine particles of Production Example 9, which were obtained by the classification, were found to have an average particle diameter, D50, of 4.4 µm.

### [Production Example 10]

A sample was produced and subjected to the first-round mechanical milling in the same manner as Production Example 5.

Following the first-round mechanical milling, the sample was further subjected to the second-round mechanical milling in the condition of plate rotational frequency 500 rpm, temperature of 20°C and milling time 5 hours, thus producing the sulfide-based solid electrolyte fine particles of Production Example 10.

As a result of measurement by the laser scattering/diffraction particle size distribution analyzer, the sulfide-based solid electrolyte fine particles of Production Example 10, which were obtained through the two cycles of mechanical milling, were found to have an average particle diameter, D50, of 0.7 µm.

### 2. Production of sulfide-based solid battery

### [Example 1]

The following negative electrode active material fine particles and sulfide-based solid electrolyte fine particles were mixed to prepare a negative electrode mixture.

Negative electrode active material fine particles: 8.74 mg (57.5% by mass, 60% by volume) of a graphite (manufactured by Hitachi Chemical Co., Ltd., D50=11 µm)

Sulfide-based solid electrolyte fine particles: 6.46 mg (42.5% by mass, 40% by volume) of the sulfide-based solid electrolyte fine particles of Production Example 1 (D50=1.9 µm)

The ratio of the average particle diameter rₐ of the negative electrode active material fine particles to the average particle diameter rₛ of the sulfide-based solid electrolyte fine particles (rₐ/rₛ) is 5.8.

Then, 65 mg of the sulfide-based solid electrolyte fine particles of Production Example 1 were put in a 1 cm² mold and pressed at 1 ton/cm² to produce a sulfide-based solid electrolyte layer. Next, 15.2 mg of the above-produced negative electrode mixture was put on one surface of the sulfide-based solid electrolyte layer and pressed at 4.3 ton/cm² to produce a negative electrode-sulfide-based solid electrolyte layer stack (a stack of the negative electrode and the sulfide-based solid electrolyte layer). Then, 2 mg of lithium metal and 60 mg of indium metal were put on the other surface of the sulfide-based solid electrolyte layer, and the whole stack was pressed at 2 ton/cm², thereby producing the sulfide-based solid battery of Production Example 1.

### [Example 2]

The sulfide-based solid battery of Example 2 was produced in the same manner as Example 1, except that the negative electrode mixture was produced by using 6.46 mg of the sulfide-based solid electrolyte fine particles of Production Example 2 (D50=3.9 µm) as the sulfide-based solid electrolyte fine particles, in place of 6.46 mg of the sulfide-based solid electrolyte fine particles of Production Example 1 (D50=1.9 µm).

The ratio of the average particle diameter rₐ of the negative electrode active material fine particles to the average particle diameter rₛ of the sulfide-based solid electrolyte fine particles (rₐ/rₛ) is 2.8.

### [Example 3]

The sulfide-based solid battery of Example 3 was produced in the same manner as Example 1, except that the negative electrode mixture was produced by using 8.74 mg of a graphite (manufactured by Hitachi Chemical Co., Ltd., D50=22.5 µm) as the negative electrode active material fine particles, in place of 8.74 mg of the graphite (manufactured by Hitachi Chemical Co., Ltd., D50=11 µm).

The ratio of the average particle diameter rₐ of the negative electrode active material fine particles to the average particle diameter rₛ of the sulfide-based solid electrolyte fine particles (rₐ/rₛ) is 12.

### [Example 4]

The sulfide-based solid battery of Example 4 was produced in the same manner as Example 1, except that the negative electrode mixture was produced by using (1) 8.74 mg of a graphite (manufactured by Hitachi Chemical Co., Ltd., D50=22.5 µm) as the negative electrode active material fine particles, in place of 8.74 mg of the graphite (manufactured by Hitachi Chemical Co., Ltd., D50=11 µm) and (2) 6.46 mg of the sulfide-based solid electrolyte fine particles of Production Example 2 (D50=3.9 µm) as the sulfide-based solid electrolyte fine particles, in place of 6.46 mg of the sulfide-based solid electrolyte fine particles of Production Example 1 (D50=1.9 µm).

The ratio of the average particle diameter rₐ of the negative electrode active material fine particles to the average particle diameter rₛ of the sulfide-based solid electrolyte fine particles (rₐ/rₛ) is 5.8.

### [Example 5]

The sulfide-based solid battery of Example 5 was produced in the same manner as Example 1, except that the negative electrode mixture was produced by using (1) 8.74 mg of a graphite (manufactured by Hitachi Chemical Co., Ltd., D50=22.5 µm) as the negative electrode active material fine particles, in place of 8.74 mg of the graphite (manufactured by Hitachi Chemical Co., Ltd., D50=11 µm) and (2) 6.46 mg of the sulfide-based solid electrolyte fine particles of Production Example 3 (D50=6.7 µm) as the sulfide-based solid electrolyte fine particles, in place of 6.46 mg of the sulfide-based solid electrolyte fine particles of Production Example 1 (D50=1.9 µm).

The ratio of the average particle diameter rₐ of the negative electrode active material fine particles to the average particle diameter rₛ of the sulfide-based solid electrolyte fine particles (rₐ/rₛ) is 3.4.

### [Example 6]

The following negative electrode active material fine particles and sulfide-based solid electrolyte fine particles were mixed to prepare a negative electrode mixture. The negative electrode mixture was applied onto a copper foil to produce a negative electrode.

Negative electrode active material fine particles: 10.00 mg (56% by mass, 60% by volume) of a graphite (manufactured by Mitsubishi Chemical Corporation, D50=10 µm)

Sulfide-based solid electrolyte fine particles: 7.9 mg (44% by mass, 40% by volume) of the sulfide-based solid electrolyte fine particles of Production Example 5 (D50=0.8 µm)

The ratio of the average particle diameter rₐ of the negative electrode active material fine particles to the average particle diameter rₛ of the sulfide-based solid electrolyte fine particles (rₐ/rₛ) is 13.

The following positive electrode active material and sulfide-based solid electrolyte were mixed to produce a positive electrode mixture. The positive electrode mixture was applied onto an aluminum foil to produce a positive electrode.

Positive electrode active material: 13.7 mg (72% by mass, 60% by volume) of LiNbO₃-coated LiNiCoMn

Sulfide-based solid electrolyte: 5.2 mg (28% by mass, 40% by volume) of the sulfide-based solid electrolyte fine particles of Production Example 5 (D50=0.8 µm)

Then, 65 mg of the sulfide-based solid electrolyte fine particles of Production Example 5 were put in a 1 cm² mold and pressed at 1 ton/cm² to produce a sulfide-based solid electrolyte layer. The sulfide-based solid electrolyte layer was sandwiched between the negative electrode and the positive electrode so that the negative electrode mixture-coated surface of the negative electrode faces one surface of the sulfide-based solid electrolyte layer, while the positive electrode mixture-coated surface of the positive electrode faces the other surface of the sulfide-based solid electrolyte layer. The whole sandwich product (stack) was pressed at 4.3 ton/cm², thereby producing the sulfide-based solid battery of Example 6.

### [Example 7]

The sulfide-based solid battery of Example 7 was produced in the same manner as Example 6, except that the negative electrode mixture, the positive electrode mixture and the sulfide-based solid electrolyte layer were produced by using the sulfide-based solid electrolyte fine particles of Production Example 6 (D50=1.5 µm) as the sulfide-based solid electrolyte fine particles, in place of the sulfide-based solid electrolyte fine particles of Production Example 5 (D50=0.8 µm).

The ratio of the average particle diameter rₐ of the negative electrode active material fine particles to the average particle diameter rₛ of the sulfide-based solid electrolyte fine particles (rₐ/rₛ) is 6.7.

### [Example 8]

The sulfide-based solid battery of Example 8 was produced in the same manner as Example 6, except that the negative electrode mixture, the positive electrode mixture and the sulfide-based solid electrolyte layer were produced by using the sulfide-based solid electrolyte fine particles of Production Example 7 (D50=2.5 µm) as the sulfide-based solid electrolyte fine particles, in place of the sulfide-based solid electrolyte fine particles of Production Example 5 (D50=0.8 µm).

The ratio of the average particle diameter rₐ of the negative electrode active material fine particles to the average particle diameter rₛ of the sulfide-based solid electrolyte fine particles (rₐ/rₛ) is 4.0.

### [Example 9]

The sulfide-based solid battery of Example 9 was produced in the same manner as Example 6, except that the negative electrode mixture, the positive electrode mixture and the sulfide-based solid electrolyte layer were produced by using the sulfide-based solid electrolyte fine particles of Production Example 8 (D50=2.6 µm) as the sulfide-based solid electrolyte fine particles, in place of the sulfide-based solid electrolyte fine particles of Production Example 5 (D50=0.8 µm).

The ratio of the average particle diameter rₐ of the negative electrode active material fine particles to the average particle diameter rₛ of the sulfide-based solid electrolyte fine particles (rₐ/rₛ) is 3.8.

### [Example 10]

The sulfide-based solid battery of Example 10 was produced in the same manner as Example 6, except that the negative electrode mixture, the positive electrode mixture and the sulfide-based solid electrolyte layer were produced by using the sulfide-based solid electrolyte fine particles of Production Example 9 (D50=4.4 µm) as the sulfide-based solid electrolyte fine particles, in place of the sulfide-based solid electrolyte fine particles of Production Example 5 (D50=0.8 µm).

The ratio of the average particle diameter rₐ of the negative electrode active material fine particles to the average particle diameter rₛ of the sulfide-based solid electrolyte fine particles (rₐ/rₛ) is 2.3.

### [Reference Example 1]

The sulfide-based solid battery of Reference Example 1 was produced in the same manner as Example 6, except that the negative electrode mixture, the positive electrode mixture and the sulfide-based solid electrolyte layer were produced by using the sulfide-based solid electrolyte fine particles of Production Example 10 (D50=0.7 µm) as the sulfide-based solid electrolyte fine particles, in place of the sulfide-based solid electrolyte fine particles of Production Example 5 (D50=0.8 µm).

The ratio of the average particle diameter rₐ of the negative electrode active material fine particles to the average particle diameter rₛ of the sulfide-based solid electrolyte fine particles (rₐ/rₛ) is 14.

### [Comparative Example 1]

The sulfide-based solid battery of Comparative Example 1 was produced in the same manner as Example 1, except that the negative electrode mixture was produced by using 6.46 mg of the sulfide-based solid electrolyte fine particles of Production Example 3 (D50=6.7 µm) as the sulfide-based solid electrolyte fine particles, in place of 6.46 mg of the sulfide-based solid electrolyte fine particles of Production Example 1 (D50=1.9 µm).

The ratio of the average particle diameter rₐ of the negative electrode active material fine particles to the average particle diameter rₛ of the sulfide-based solid electrolyte fine particles (rₐ/rₛ) is 1.6.

### [Comparative Example 2]

The sulfide-based solid battery of Comparative Example 2 was produced in the same manner as Example 1, except that the negative electrode mixture was produced by using 6.46 mg of the sulfide-based solid electrolyte fine particles of Production Example 4 (D50=16 µm) as the sulfide-based solid electrolyte fine particles, in place of 6.46 mg of the sulfide-based solid electrolyte fine particles of Production Example 1 (D50=1.9 µm).

The ratio of the average particle diameter rₐ of the negative electrode active material fine particles to the average particle diameter rₛ of the sulfide-based solid electrolyte fine particles (rₐ/rₛ) is 0.69.

### [Comparative Example 3]

The sulfide-based solid battery of Comparative Example 3 was produced in the same manner as Example 1, except that the negative electrode mixture was produced by using (1) 8.74 mg of a graphite (manufactured by Hitachi Chemical Co., Ltd., D50=22.5 µm) as the negative electrode active material fine particles, in place of 8.74 mg of the graphite (manufactured by Hitachi Chemical Co., Ltd., D50=11 µm), and (2) 6.46 mg of the sulfide-based solid electrolyte fine particles of Production Example 4 (D50=16 µm) as the sulfide-based solid electrolyte fine particles, in place of 6.46 mg of the sulfide-based solid electrolyte fine particles of Production Example 1 (D50=1.9 µm).

The ratio of the average particle diameter rₐ of the negative electrode active material fine particles to the average particle diameter rₛ of the sulfide-based solid electrolyte fine particles (rₐ/rₛ) is 1.4.

### [Comparative Example 4]

The sulfide-based solid battery of Comparative Example 4 was produced in the same manner as Example 6, except that the negative electrode mixture and the positive electrode mixture were produced by using the sulfide-based solid electrolyte fine particles of Production Example 3 (D50=6.7 µm) as the sulfide-based solid electrolyte fine particles, in place of the sulfide-based solid electrolyte fine particles of Production Example 5 (D50=0.8 µm).

The ratio of the average particle diameter rₐ of the negative electrode active material fine particles to the average particle diameter rₛ of the sulfide-based solid electrolyte fine particles (rₐ/rₛ) is 1.5.

### 3. Discharge test of sulfide-based solid battery

A discharge test was performed on the sulfide-based solid batteries of Examples 1 to 5 and Comparative Examples 1 to 3 to measure the negative electrode capacity. The details of the test are as follows.
Discharge test apparatus: TOS-CAT3200 (manufactured by Toyo System Co., Ltd.)
Temperature : 60°C
Current density: 0.1 C (0.325 mA/cm²) or 2 C (6.5 mA/cm²)
Voltage: Discharged at 1.5 V to 0 V

For the sulfide-based solid batteries of Examples 1 to 5 and Comparative Examples 1 to 3, the negative electrode capacity, the average particle diameter rₐ (µm) of the negative electrode active material fine particles, the average particle diameter rₛ (µm) of the sulfide-based solid electrolyte fine particles, and the ratio (rₐ/rₛ) are shown in Table 1.

**Table 1**

| | Average particle diameter rₐ (µm) of negative electrode active material fine particles | Average particle diameter rₛ (µm) of sulfide-based solid electrolyte fine particles | rₐ/rₛ | Negative electrode capacity (mAh/g) | |
|---|---|---|---|---|---|
| | | | | 0.1 C | 2 C |
| Example 1 | 11 | 1.9 | 5.8 | 373 | 318 |
| Example 2 | 11 | 3.9 | 2.8 | 372 | 315 |
| Example 3 | 22.5 | 1.9 | 12 | 372 | 272 |
| Example 4 | 22.5 | 3.9 | 5.8 | 373 | 273 |
| Example 5 | 22.5 | 6.7 | 3.4 | 372 | 272 |
| Comparative Example 1 | 11 | 6.7 | 1.6 | 372 | 251 |
| Comparative Example 2 | 11 | 16 | 0.69 | 368 | 220 |
| Comparative Example 3 | 22.5 | 16 | 1.4 | 370 | 209 |

The sulfide-based solid batteries of Examples 6 to 10, Reference Example 1 and Comparative Example 4 were left to stand at 25°C for 3 hours. Then, a discharge test was performed on the batteries to measure the negative electrode capacity. The details of the test are as follows.
Discharge test apparatus: TOS-CAT3200 (manufactured by Toyo System Co., Ltd.)
Temperature: 25°C
Charge/discharge condition: After charged and discharged at a rate of 1/3 C, each battery was charged and discharged at a rate of 1.5 C to measure the negative electrode capacity which allows normal charging without a decrease in voltage.

For the sulfide-based solid batteries of Examples 6 to 10, Reference Example 1 and Comparative Example 4, the temperature was controlled to 25°C with a thermostat. Then, the lithium ion conductivity was measured by impedance measurement, using an impedance/gain-phase analyzer (SI1260 manufactured by Solartron Analytical).

For the sulfide-based solid batteries of Examples 6 to 10, Reference Example 1 and Comparative Example 4, the lithium ion conductivity, the negative electrode capacity at 1.5 C, the average particle diameter rₐ (µm) of the negative electrode active material fine particles, the average particle diameter rₛ (µm) of the sulfide-based solid electrolyte fine particles, and the ratio (rₐ/rₛ) are shown in Table 2.

**Table 2**

| | Average particle diameter rₐ (µm) of negative electrode active material fine particles | Average particle diameter rₛ (µm) of sulfide-based solid electrolyte fine particles | rₐ/rₛ | Lithium ion conductivity (10⁻³ S/cm) | Negative electrode capacity at 1.5 C (mAh/g) |
|---|---|---|---|---|---|
| Example 6 | 10 | 0.8 | 13 | 0.8 | 151 |
| Example 7 | 10 | 1.5 | 6.7 | 1.1 | 176 |
| Example 8 | 10 | 2.5 | 4.0 | 1.2 | 155 |
| Example 9 | 10 | 2.6 | 3.8 | 1.3 | 150 |
| Example 10 | 10 | 4.4 | 2.3 | 1.4 | 124 |
| Reference Example 1 | 10 | 0.7 | 14 | 0.5 | 107 |
| Comparative Example 4 | 10 | 6.7 | 1.5 | 1.2 | 82 |

### 4. SEM observation of negative electrode of sulfide-based solid battery

For the sulfide-based solid batteries of Example 1 and Comparative Example 1, the negative electrode was observed with a scanning electron microscope (SEM).

The SEM observation condition is as follows. That is, SEM observation was performed with a scanning electron microscope (S-5500 manufactured by Hitachi, Ltd.) at an accelerating voltage of 30 kV and a 500,000- to 800,000-fold magnification.

### 5. Experimental results

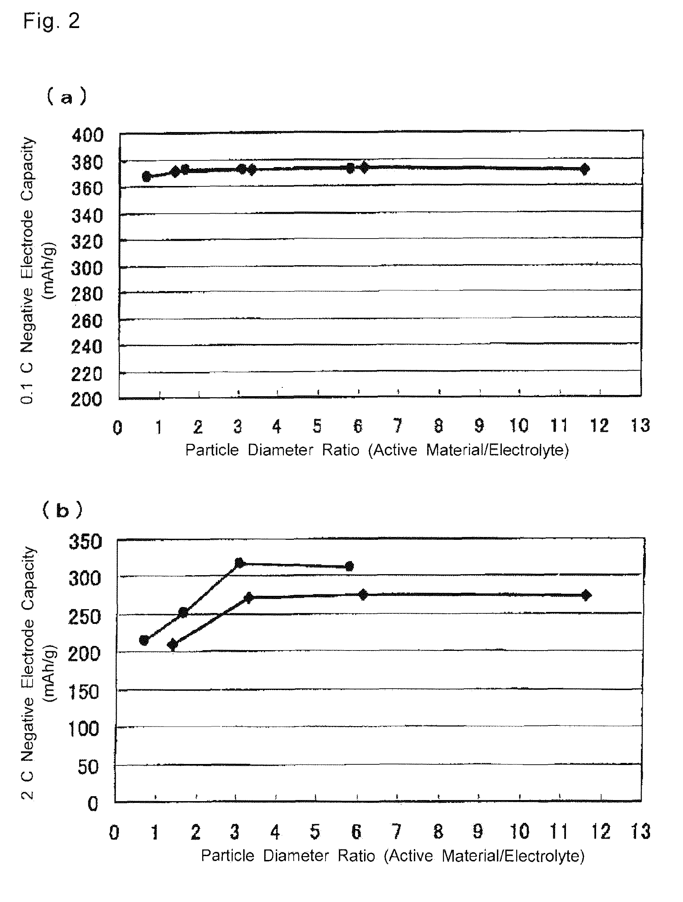

Fig. 2(a) is a graph comparing the negative electrode capacities of sulfide-based solid batteries of Examples 1 to 5 and Comparative Examples 1 to 3, under a current density condition of 0.1 C. Fig. 2(a) is a graph with the negative electrode capacity (mAh/g) at 0.1 C on the vertical axis and the ratio (rₐ/rₛ) on the horizontal axis, which is the ratio of the average particle diameter rₐ of the negative electrode active material fine particles to the average particle diameter rₛ of the sulfide-based solid electrolyte fine particles. In this graph, plotted black rhombuses show the experimental results of Examples 3 to 5 and Comparative Example 3, each of which used negative electrode active material fine particles having an average particle diameter of 22.5 µm, while plotted black circles show the experimental results of Examples 1 and 2 and Comparative Examples 1 and 2, each of which used negative electrode active material fine particles having an average particle diameter of 11 µm.

As is clear from Fig. 2(a), regardless of the average particle diameter ratio (rₐ/rₛ), the negative electrode capacity of any of the sulfide-based solid batteries of Examples 1 to 5 and Comparative Examples 1 to 3, is within the range of 360 to 380 mAh/g.

Fig. 2(b) is a graph comparing the negative electrode capacities of sulfide-based solid batteries of Examples 1 to 5 and Comparative Examples 1 to 3, under a current density condition of 2 C. Fig. 2(b) is a graph with the negative electrode capacity at 2 C (mAh/g) on the vertical axis and the ratio (rₐ/rₛ) on the horizontal axis, which is the ratio of the average particle diameter rₐ of the negative electrode active material fine particles to the average particle diameter rₛ of the sulfide-based solid electrolyte fine particles. In this graph, plotted black rhombuses and plotted black circles are as explained above concerning Fig. 2(a).

First, the experimental results (black circles) of Examples 1 and 2 and Comparative Examples 1 and 2 will be discussed, each of which used the negative electrode active material fine particles having an average particle diameter of 11 µm. Under the current density condition of 2 C, the negative electrode capacities of Comparative Examples 1 and 2 are 251 mAh/g and 220 mAh/g, respectively, any of which are less than 260 mAh/g. On the other hand, under the current density condition of 2 C, the negative electrode capacities of Examples 1 and 2 are 318 mAh/g and 315 mAh/g, respectively, any of which are more than 300 mAh/g.

Next, the experimental results (plotted black rhombuses) of Examples 3 to 5 and Comparative Example 3 will be discussed, each of which used the negative electrode active material fine particles having an average particle diameter of 22.5 µm. Under the current density condition of 2 C, the negative electrode capacity of Comparative Example 3 is 209 mAh/g, which is the lowest among the sulfide-based solid batteries of Examples 1 to 5 and Comparative Examples 1 to 3. On the other hand, under the current density condition of 2 C, the negative electrode capacities of Example 3, 4 and 5 are 272 mAh/g, 273 mAh/g and 272 mAh/g, respectively, any of which is more than 250 mAh/g.

In Fig. 2(b), as is clear from the graph obtained by connecting the plotted black rhombuses and that obtained by connecting the plotted black circles, in the case of focusing on experimental examples which are equal in the average particle diameter of the negative electrode active material fine particles used, there is a rapid decrease in negative electrode capacity when the ratio of the average particle diameter rₐ of the negative electrode active material fine particles to the average particle diameter rₛ of the sulfide-based solid electrolyte fine particles (rₐ/rₛ) is less than 2.0. It is also clear that when the ratio (rₐ/rₛ) is 2.0 or more, the negative electrode capacity is within a certain range, regardless of the value of the ratio (rₐ/rₛ).

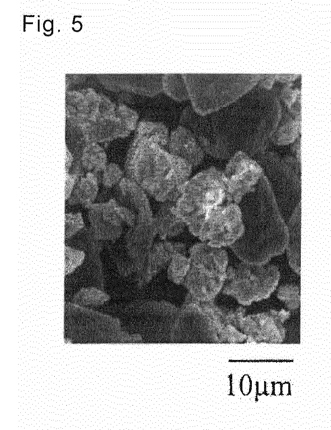

Fig. 5 is an SEM image showing the negative electrode of the sulfide-based solid battery of Comparative Example 1. As is clear from Fig. 5, when the ratio of the average particle diameter rₐ of the negative electrode active material fine particles to the average particle diameter rₛ of the sulfide-based solid electrolyte fine particles (rₐ/rₛ) is less than 2.0, the sulfide-based solid electrolyte fine particles are too large, so that the contact area between the negative electrode active material fine particles and the sulfide-based solid electrolyte fine particles is smaller than the case where the ratio (rₐ/rₛ) is 2.0 or more. Therefore, when the ratio (rₐ/rₛ) is less than 2.0, the supply of lithium ions from the sulfide-based solid electrolyte fine particles to the negative electrode active material fine particles is interrupted, so that the lithium ion supply is thought to become the rate-determining step.

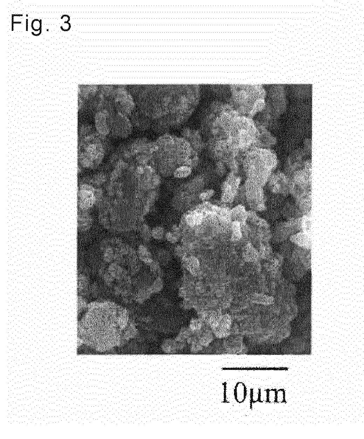

Fig. 3 is an SEM image showing the negative electrode of the sulfide-based solid battery of Example 1. As is clear from Fig. 3, when the ratio of the average particle diameter rₐ of the negative electrode active material fine particles to the average particle diameter rₛ of the sulfide-based solid electrolyte fine particles (rₐ/rₛ) is 2.0 or more, the sulfide-based solid electrolyte fine particles are small enough and surround the negative electrode active material fine particles, so that sufficient contact area is obtained between the negative electrode active material fine particles and the sulfide-based solid electrolyte fine particles. Therefore, when the ratio (rₐ/rₛ) is 2.0 or more, there is a large supply of lithium ions from the sulfide-based solid electrolyte fine particles to the negative electrode active material fine particles, so that the negative electrode capacity is thought to be increased.

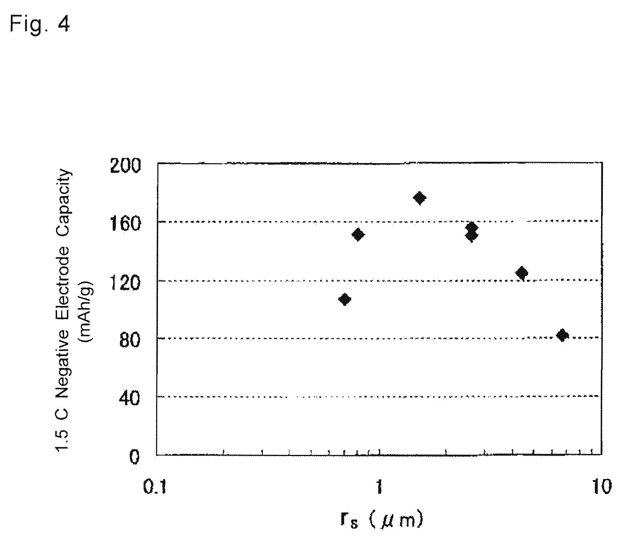

Fig. 4 is a graph comparing the negative electrode capacities of sulfide-based solid batteries of Examples 6 to 10, Reference Example 1 and Comparative Example 4, under a current density condition of 1.5 C. Fig. 4 is a graph with the negative electrode capacity (mAh/g) at 1.5 C on the vertical axis and the natural log of the average particle diameter rₛ (µm) of the sulfide-based solid electrolyte fine particles on the horizontal axis. Hereinafter, Examples 6 to 10, Reference Example 1 and Comparative Example 4 will be compared and discussed, with reference to Table 2 and Fig. 4.

Table 2 shows that the lithium ion conductivity of Comparative Example 4 is 1.2×10⁻³ S/cm. Therefore, there is no problem with the lithium ion conductivity of the sulfide-based solid battery of Comparative Example 4. However, Table 2 and Fig. 4 show that under the current density condition of 1.5 C, the negative electrode capacity of Comparative Example 4 is 82 mAh/g and less than 100 mAh/g. This result is the lowest negative electrode capacity among the sulfide-based solid batteries of Examples 6 to 10, Reference Example 1 and Comparative Example 4. The reason is thought to be as follows: because, in Comparative Example 4, the ratio of the average particle diameter rₐ of the negative electrode active material fine particles to the average particle diameter rₛ of the sulfide-based solid electrolyte fine particles (rₐ/rₛ) is as low as less than 2.0 and this is too low, the supply of lithium ions from the sulfide-based solid electrolyte fine particles to the negative electrode active material fine particles is interrupted, so that the lithium ion supply is thought to become the rate-determining step.

Also, Table 2 shows that the lithium ion conductivities of Examples 6, 7, 8, 9 and 10 are 0.8×10⁻³ S/cm, 1.1×10⁻³ S/cm, 1.2×10⁻³ S/cm, 1.3×10⁻³ S/cm and 1.4×10⁻³ S/cm, respectively. Therefore, there is no problem with the lithium ion conductivities of Examples 6 to 10. It is also clear from these results that when the average particle diameters rₐ of the negative electrode active material fine particles are equal, the lithium ion conductivity increases as the average particle diameter rₛ of the sulfide-based solid electrolyte fine particles increases.

Also, Table 2 and Fig. 4 shows that under the current density condition of 1.5 C, the negative electrode capacities of Examples 6, 7, 8, 9 and 10 are 151 mAh/g, 176 mAh/g, 155 mAh/g, 150 mAh/g and 124 mAh/g, respectively. These results are more than 120 mAh/g. Therefore, the following is clear: such a negative electrode that the ratio of the average particle diameter rₐ of the negative electrode active material fine particles to the average particle diameter rₛ of the sulfide-based solid electrolyte fine particles (rₐ/rₛ) is 2.0 or more, is 1.5 times higher in negative electrode capacity than the negative electrode in which the ratio (rₐ/rₛ) is less than 2.0.

Also, Table 2 and Fig. 4 show that Example 6, which used the sulfide-based solid electrolyte fine particles having an average particle diameter of 0.8 µm, is 1.4 times higher in negative electrode capacity than Reference Example 1, which used the sulfide-based solid electrolyte fine particles having an average particle diameter of 0.7 µm, under the current density condition of 1.5 C. It is thus clear that by setting the average particle diameter of the sulfide-based solid electrolyte fine particles to 0.8 µm or more, the difference between the average particle diameter rₐ of the negative electrode active material fine particles and the average particle diameter rₛ of the sulfide-based solid electrolyte fine particles is decreased; therefore, the contact area between the negative electrode active material fine particles and the sulfide-based solid electrolyte fine particles is appropriately increased and results in a further increase in negative electrode capacity.

### Reference Signs List

- 1.: Sulfide-based solid electrolyte layer
- 2.: Positive electrode active material layer
- 3.: Negative electrode active material layer
- 4.: Positive electrode current collector
- 5.: Negative electrode current collector
- 6.: Positive electrode
- 7.: Negative electrode
- 100.: Sulfide-based solid battery

## Claims

1. A sulfide-based solid battery comprising a positive electrode, a negative electrode and a sulfide-based solid electrolyte layer, the sulfide-based solid electrolyte layer being present between the positive electrode and the negative electrode,
wherein the negative electrode comprises at least a negative electrode active material layer;
wherein the negative electrode active material layer comprises negative electrode active material fine particles and sulfide-based solid electrolyte fine particles; and
wherein the ratio of average particle diameter rₐ of the negative electrode active material fine particles to average particle diameter rₛ of the sulfide-based solid electrolyte fine particles (rₐ/rₛ) is 2.0 or more.

2. The sulfide-based solid battery according to claim 1, wherein the average particle diameter rₐ of the negative electrode active material fine particles is 50 µm or less.

3. The sulfide-based solid battery according to claim 1 or 2, wherein the average particle diameter rₛ of the sulfide-based solid electrolyte fine particles is 0.8 µm or more.

4. The sulfide-based solid battery according to any one of claims 1 to 3, wherein the battery is charged at a current density of 1 C or more.
